# EUROPÄISCHE PATENTSCHRIFT

(11) **EP 0 856 533 B1**
(45) Veröffentlichungstag und Bekanntmachung des Hinweises auf die Patenterteilung: **30.07.2003**
(21) Anmeldenummer: 98101350.1
(22) Anmeldetag: 27.01.1998
(51) Int. Cl.: C08F 220/28, C08G 18/62, C09D 175/04, C09D 133/14

(54) **Überzugsmittel enthaltend hydroxylgruppenhaltige Copolymerisate**
Coatings based on polymers containing hydroxyl groups
Revêtements à base de polymères contenant des groupes hydroxyl

(30) Priorität: 04.02.1997 DE 19704020
(43) Veröffentlichungstag der Anmeldung: 05.08.1998
(73) Patentinhaber: E.I. DU PONT DE NEMOURS AND COMPANY, Wilmington Delaware 19898 (US)
(72) Erfinder: Bremer, Gerhard, Dr., 50226 Frechen (DE); Kerber, Hermann, 42369 Wuppertal (DE); Krumme, Manfred, 50374 Erftstadt (DE); Ley, Olaf, 42329 Wuppertal (DE); Stephan, Werner, 42111 Wuppertal (DE); Wabbels, Jörg, 44807 Bochum (DE)
(74) Vertreter: Gille Hrabal Struck Neidlein Prop Roos

(56) Entgegenhaltungen:
- EP-A- 0 580 054
- EP-A- 0 653 468
- EP-A- 0 680 977
- US-A- 4 082 816

## Beschreibung

Die Erfindung betrifft lösemittelbasierende Überzugsmittel, die als Bindemittel hydroxylgruppenhaltige Copolymerisate enthalten. Sie finden insbesondere Anwendung bei der Herstellung transparenter und/oder pigmentierter Decklacküberzüge in der Fahrzeug- und Fahrzeugteilelackierung.

Hydroxylgruppenhaltige Copolymerisatharze, die mit Polyisocyanaten oder Melaminharzen vernetzbar sind, sind als Lackbindemittel in der Fahrzeuglackierung bekannt. Durch vielfältige Variation der Copolymerenzusammensetzung bezüglich Monomerenart und Monomerenmenge können die Eigenschaften der aus diesen Bindemitteln formulierten Überzugsmittel modifiziert und den je nach Anwendungszweck unterschiedlichen Anforderungsprofilen angepaßt werden.

So werden beispielsweise in der DE-A-37 31 652 Überzugsmittel auf Basis von Polyacrylatharzen mit Hydroxyl-, Carboxyl- und tertiären Aminogruppen beschrieben, wobei die Copolymerisate hergestellt werden aus hydroxyfunktionellen olefinisch ungesättigten Monomeren, olefinisch ungesättigten Carbonsäuren und weiteren polymerisierbaren Monomeren und das Reaktionsprodukt weiter umgesetzt wird mit Verbindungen, die Isocyanatgruppen und tertiäre Aminogruppen enthalten. Die hydroxyfunktionellen olefinisch ungesättigten Monomere können teilweise bestehen aus mit Caprolacton modifizierten Hydroxyalkylestern ungesättigter Carbonsäuren und/oder aus Umsetzungsprodukten ungesättigter Carbonsäuren wie Acrylsäure mit Glycidylestern von alpha, alpha- Dialkylalkanmonocarbonsäuren.

In der DE-A-28 51 616 werden Copolymerisatlösungen beschrieben, die erhalten werden, indem ungesättigte Monocarbonsäuren mit Monoglycidylverbindungen, z.B. Acrylsäure mit Glycidylestern von alpha, alpha-Dialkylalkanmonocarbonsäuren, in einem organischen Lösemittel in Gegenwart monomerer Vinylverbindungen umgesetzt werden und anschließend mit den Vinylverbindungen polymerisiert werden.

Nachteilig an den vorstehend beschriebenen Copolymerisatharzen ist, daß aus ihnen formulierte isocyanatvernetzende Überzugsmittel unter den Bedingungen der Autoreparaturlackierung unzureichende Trocknungseigenschaften und mangelhafte Härte aufweisen.

Weiterhin werden in der EP-A-349 818 hydroxylgruppenhaltige Copolymerisate beschrieben, die durch Lösungspolymerisation von 5-25 Gew.-% Vinylester von Monocarbonsäuren, 10-50 Gew.-% vinylaromatischer Kohlenwasserstoffe und 10-40 Gew.-% hydroxyfunktioneller ungesättigter Monomere hergestellt werden, wobei die Monomere in einer speziellen Art und Weise zudosiert werden. Die so hergestellten Copolymere weisen einen hohen Restmonomerenanteil an Vinylestem von Monocarbonsäuren auf, der zu stark getrübten Polymerlösungen führt. Aus den Copolymeren hergestellte Klarlacke zeigen außerdem bei Raumtemperatur unzureichende Trocknungseigenschaften.

Die EP-A-0653468 offenbart ein Überzugsmittel, geeignet zur Herstellung transparenter Deckschichten von Mehrschichtüberzügen enthaltend Bindemittel auf der Basis hydroxyfunktioneller (Meth)acryl-Copolymerisate, geblockter Polyisocyanate, Aminoplastharze und gegebenenfalls hydroxyfunktioneller Polyesterharze, neben lacküblichen Additiven und Lösemitteln.
Die US 4082816 offenbart Caprolacton-enthaltende Vinylpolymere und sie enthaltende Überzugsmittel.
Die EP-A-0680977 offenbart niedrig-viskose Copolymere, die Hydroxyl- und Carboxylgruppen enthalten und durch radikalische Polymeristaion erhalten werden, die in Beschichtungszusammensetzungen verwendet werden können.
Die EP-A-0580054 offenbart ein Verfahren zur Herstellung von Polyhydroxylverbindungen durch Polymerisation olefinisch ungesättigter Monomerer und ihre Verwendung als Bindemittelkomponente in Ein- oder Zweikomponenten-Lacken, insbesondere Ein- oder Zweikomponenten-Polyurethanlacken.

Aufgabe der Erfindung ist es daher Überzugsmittel bereitzustellen, die als Bindemittel hydroxyfunktionelle Copolymerisate auf Basis von Vinylestern von Monocarbonsäuren enthalten, die einen sehr geringen Restmonomerengehalt an Vinylestern gesättigter Monocarbonsäuren aufweisen und trübungsfreie Polymerlösungen ergeben. Mit den hydroxyfunktionellen Copolymerisaten formulierte Überzugsmittel sollen hochbrillante Filme ergeben und insbesondere unter den Bedingungen der Fahrzeugreparaturlackierung kurze Trockenzeiten und sehr gute Härte aufweisen.

Die Aufgabe wird gelöst durch ein Überzugsmittel, enthaltend Bindemittel, ein oder mehrere Polyisocyanate mit freien Isocyanatgruppen als Vernetzer, organische Lösemittel und gegebenenfalls Pigmente, Füllstoffe und/oder lackübliche Additive, dadurch gekennzeichnet, daß es als Bindemittel ein oder mehrere hydroxylgruppenhaltige Copolymerisate auf der Basis von Vinlyestern von Monocarbonsäuren enthält, die eine OH-Zahl von 110-170 mg KOH/g, eine Säurezahl von 5-35 mg KOH/g und ein zahlenmittleres Molekulargewicht Mₙ von 1500-8000 g/mol besitzen und erhältlich sind durch Polymerisation von
A) 5-20 Gew.-% eines oder mehrerer Vinylester gesättigter Monocarbonsäuren,
B) 10-30 Gew.-% eines oder mehrerer vinylaromatischer Kohlenwasserstoffe,
C) 41-55 Gew.-% hydroxyfunktioneller polymerisierbarer ungesättigter Monomere und
D) 0- 40 Gew.-% weiterer polymerisierbarer ungesättigter Monomere,
wobei die Komponente C)
C1) mindestens 40 Gew.-% eines oder mehrerer Hydroxyalkylester alpha, beta-ungesättigter Monocarbonsäuren,
C2) 1-10 Gew.-%, eines oder mehrerer Lactone, und
C3) 30-55 Gew.-% eines oder mehrerer Umsetzungsprodukte einer alpha,betaungesättigten Monocarbonsäure mit einem Glycidylester einer gesättigten alpha,alpha-Dialkylalkanmonocarbonsäure oder einer gesättigten alpha-Alkylalkanmonocarbonsäure enthält, wobei sich
die Summe der Komponenten A) bis D) und die Summe der Komponenten C1) bis C3) jeweils zu 100 Gew.-% ergänzen.

Der Ausdruck (Meth)acryl soll hier und im folgenden stehen für Acryl und/oder Methacryl.

Die Herstellung der Copolymerisate aus den Komponenten A), B), C) und ggf. D) kann durch Polymerisation nach üblichen Verfahren, z. B. der Substanz-, Lösunas-, oder Perlpolymerisation durchgeführt werden. Die verschiedenen Polymerisationsverfahren sind dem Fachmann gut bekannt.

Das Lösungspolymerisationsverfahren wird für die Herstellung der Copolymerisate bevorzugt. Dabei wird das Lösemittel in das Reaktionsgefäß vorgelegt, auf Siedetemperatur geheizt und das Monomeren/ Initiatorgemisch kontinuierlich in einer bestimmten Zeit zudosiert. Die Polymerisation wird bevorzugt bei Temperaturen zwischen 100 °C und 180 °C, vorzugsweise bei
130 °C bis 160 °C durchgeführt. Die Polymerisationsreaktion kann mit bekannten Polymerisationsmitiatoren gestartet werden.

Beispiele für bevorzugt eingesetzte Initiatoren für die Polymerisation sind: Dialkylperoxide, wie Di-tert.-Butylperoxid, Dicumylperoxid; Diacylperoxide, wie Dibenzoylperoxid, Dilauroylperoxid, Perester, wie tert.-Butylperbenzoat, tert.-Butylperpivalat, Hydroperoxide, wie Cumolhydroperoxid, Azoverbindungen, wie Azo-bis-cyclohexancarbonitril, Azo-bis-isobutyronitril.

Als organische Lösemittel, die zweckmäßigerweise bei der Lösungspolymerisation sowie später auch in den erfindungsgemäßen Uberzugsmitteln eingesetzt werden können, eignen sich beispielsweise: Glykolether, wie Ethylenglykoldimethylether; Propylenglykoldimethylether; Glykoletherester, wie Ethylglykolacetat, Butylglykolacetat, 3-Methoxy-n-butylacetat, Butyldiglykolacetat, Methoxypropylacetat, Ester wie Butylacetat, Isobutylacetat, Amylacetat; Ketone, wie Methylethylketon, Methylisobutylketon, Cyclohexanon, Isophoron, aromatische Kohlenwasserstoffe (z.B. mit einem Siedebereich von 136-180 °C), aliphatische Kohlenwasserstoffe.

Zur Regelung des Molekulargewichtes können Kettenüberträger, wie z.B. Mercaptane, Thioglykolsäureester, Cumol, dimeres alpha-Methylstyrol, eingesetzt werden.

Die aus den Monomerkomponenten A), B), C) und ggf. D) erhaltenen Copolymerisate haben eine OH-Zahl von 110-170, bevorzugt 120-160 mg KOH/g, eine Säurezahl von 5-35, bevorzugt 10-30 mg KOH/g, ein zahlenmittleres Molekulargewicht Mn von 1500-8000, bevorzugt von 2000-6000 und eine 1500-8000, bevorzugt von 2000-6000 und eine Glasübergangstemperatur T_{g} von 30-70 °C bevorzugt von 40-60 °C.

Die Copolymerisate weisen einen Restmonomerenanteil an Vinylestern ungesättigter Monocarbonsäuren (Komponente A) von maximal 1 Gew.-%, bevorzugt von unter 0,9 Gew.-% auf (bestimmt nach der MCS-Methode - Multi Column Switching Gaschromatographic System), bezogen jeweils auf die Gesamteinsatzmenge von Komponente A.
Als Monomerkomponente A) werden Vinylester gesättigter Monocarbonsäuren, bevorzugt Vinylester von in alpha-Stellung verzweigten gesättigten Monocarbonsäuren mit 5-15 C-Atomen im Molekül, einzeln oder im Gemisch eingesetzt. Bevorzugt sind dabei Vinylester von gesättigten alpha-Alkylalkanmonocarbonsäuren und/oder von gesättigten alpha,alpha-Dialkylalkanmonocarbonsäuren mit 5-13 C-Atomen im Molekül. Besonders bevorzugt sind die Glycidylester von alpha,alpha-Dialkylmonocarbonsäuren mit 9-11 C-Atomen im Molekül. Die Alkylreste können hierbei auch eine unterschiedliche Anzahl an C-Atomen besitzen. Die Vinylester werden z.B. durch Umsetzung der vorstehend genannten gesättigten Monocarbonsäuren mit Acetylen erhalten. Sie sind kommerziell erhältlich, z. B. als Veova 9, Veova 10.

Die Komponente A) wird in einer Menge von 5-20 Gew.-%, bevorzugt 8-14 Gew.-%, bezogen auf das gesamte Copolymerisat, eingesetzt.

Als Monomerkomponente B) werden vinylaromatische Kohlenwasserstoffe, bevorzugt solche mit 8-9 C-Atomen pro Molekül eingesetzt. Beispiele für geeignete Verbindungen sind Styrol, alpha-Methylstyrol, Chlorstyrole, Vinyltoluole, 2,5-Dimethylstyrol, p-Methoxystyrol. Bevorzugt wird Styrol verwendet. Die Komponente B) wird in einer Menge von 10-30 Gew.-%, bevorzugt von 12-20 Gew.-%, bezogen auf das gesamte Copolymerisat, eingesetzt.

Bei der Monomerkomponente C) handelt sich um hydroxyfunktionelle ungesättigte Monomere. Die Komponente C) wird in einer Menge von 41-55 Gew.-%, bevorzugt von 43-50 Gew.-%, bezogen auf das gesamte Copolymerisat, eingesetzt. Die hydroxyfunktionelle Komponente C) enthält die Komponenten C1) bis C3).

Als Komponente C1) werden Hydroxyalkylester alpha,beta-ungesättigter Monocarbonsäuren mit primären oder sekundären Hydroxylgruppen eingesetzt. Dabei kann es sich beispielsweise um die Hydroxyalkylester der Acrylsäure, Methacrylsäure, Crotonsäure und/oder Isocrotonsäure handeln. Bevorzugt sind die Hydroxyalkylester der (Meth)acrylsäure. Die Hydroxyalkylreste können beispielsweise 1-10 C-Atome, bevorzugt 2-6 C-Atome enthalten. Beispiele für geeignete Hydroxyalkylester alpha,beta-ungesättigter Monocarbonsäuren mit primären Hydroxylgruppen sind Hydroxyethyl(meth)acrylat, Hydroxypropyl(meth)acrylat, Hydroxybutyl(meth)acrylat, Hydroxyamyl(meth)acrylat, Hydroxyhexyl(meth)acrylat. Beispiele für geeignete Hydroxyalkylester mit sekundären Hydroxylgruppen sind 2-Hydroxypropyl(meth)acrylat, 2-Hydroxybutyl(meth)acrylat, 3-Hydroxybutyl(meth)acrylat.

Die Komponente C1) wird in einer Menge von mindestens 40 Gew.-%, bevorzugt 50-60 Gew. - %, bezogen auf die Gesamtmenge an Komponente C) eingesetzt.

Als Komponente C2) werden ein oder mehrere Lactone eingesetzt. Geeignete Lactone sind z.B. solche, die 3-15 C-Atome im Ring enthalten, wobei die Ringe auch verschiedene Substituenten aufweisen können. Bevorzugte Lactone sind gamma-Butyrolacton, delta-Valerolacton, epsilon-Caprolacton, beta-Hydroxy-beta-methyldelta-Valerolacton, lambda-Laurinlacton oder deren Gemische. Besonders bevorzugt ist epsilon-Caprolacton.

Mittels der eingesetzten Lactone erfolgt eine Modifizierung der Hydroxylgruppen eines Teiles der vorstehend beschriebenen Hydroxyalkylester alpha,beta-ungesättigter Moncarbonsäuren (Komponente C1) durch eine unter Ringöffnung des Lactons ablaufende Veresterungsreaktion. Es entstehen bei der Umsetzung endständig erneut Hydroxylgruppen in Form von dem jeweiligen Lacton entsprechenden Hydroxyalkylestergruppen. Vorzugsweise handelt es sich bei den Umsetzungsprodukten um solche aus einem Mol eines Hydroxyalkylesters einer alpha,beta-ungesättigten Monocarbonsäure und 1-5 Mol, bevorzugt durchschnittlich 2 Mol, eines Lactons. Die Modifizierung der Hydroxylgruppen der Hydroxyalkylester mit dem Lacton kann vor, während oder im Anschluß an die Durchführung der Copolymerisationsreaktion erfolgen.

Die Komponente C2) wird in einer Menge von 1-10 Gew.-%, bevorzugt 1-6 Gew.-%, bezogen auf die Gesamtmenge an Komponente C), eingesetzt.

Als Komponente C3) werden Umsetzungsprodukte alpha,beta-ungesättigter Monocarbonsäuren mit Glycidylestern gesättigter alpha-Alkylalkanmonocarbonsäuren oder gesättigter alpha,alpha-Dialkylalkanmonocarbonsäuren eingesetzt. Bevorzugt handelt es sich dabei um die Umsetzungsprodukte der (Meth)acrylsäure mit Glycidylestern gesättigter alpha, alpha-Dialkylalkanmonocarbonsäuren mit 7-13 C-Atomen im Molekül, besonders bevorzugt mit 9-11 C-Atomen im Molekül. Die Glycidylester werden z.B. durch Umsetzung der entsprechenden Carbonsäuren mit Epichlorhydrin in bekannter Weise hergestellt. Sie sind kommerziell erhältlich, z. B. als Cardura E10.

Das Umsetzungsprodukt C3) kann vor der Copolymerisationsreaktion oder in Anwesenheit der anderen ungesättigten polymerisierbaren Monomere hergestellt werden.

Die Komponente C3) wird in einer Menge von 30-55 Gew.-%, bevorzugt 35-50 Gew.-%, bezogen auf die Gesamtmenge an Komponente C), eingesetzt.

Zur Herstellung der Copolymerisate kann die Monomerkomponente D) eingesetzt werden. Als Komponente D) können weitere von A), B) und C) verschiedene ungesättigte polymerisierbare Monomere eingesetzt werden. Es kann sich hierbei um ungesättigte Monomere mit weiteren funktionellen Gruppen, z.B. Aminogruppen, Ethergruppen und Carboxylgruppen, und/oder um ungesättigte Monomere ohne weitere funktionelle Gruppen handeln.

Ungesättigte Monomere mit Carboxylgruppen sind beispielsweise alpha,beta - ungesättigte Monocarbonsäuren, wie Acrylsäure, Methacrylsäure, Crotonsäure, Isocrotonsäure. Bevorzugt sind Acryl- und Methacrylsäure.

Geeignete ungesättigte Monomere ohne weitere funktionelle Gruppen sind beispielsweise Ester ungesättigter Monocarbonsäuren mit aliphatischen einwertigen verzweigten oder unverzweigten sowie cyclischen Alkoholen mit 1-20 C-Atomen. Bevorzugt handelt es sich um Ester der Acrylsäure oder Methacrylsäure. Beispiele für Ester mit aliphatischen Alkoholen sind Methylacrylat, Ethylacrylat, Isopropylacrylat, tert.-Butylacrylat, n-Butylacrylat, Isobutylacrylat, 2-Ethylhexylacrylat, Laurylacrylat, Stearylacrylat und die entsprechenden Methacrylate. Beispiele für Ester mit cyclischen Alkoholen sind Cyclohexylacrylat, Trimethylcyclohexylacrylat, 4-tert.
Butylcyclohexylacrylat, Isobornylacrylat und die entsprechenden Methacrylate. Ebenso können von A) verschiedene Vinylester, wie z.B. Vinylacetat oder Vinylpropionat, eingesetzt werden.

Es können auch ethylenisch polyungesättigte Monomere eingesetzt werden. Das sind Monomere mit mindestens 2 radikalisch polymerisierbaren Doppelbindungen.
Beispiele hierfür sind Divinylbenzol, 1,4-Butandioldiacrylat, 1,6-Hexandioldiacrylat, Neopentylglykoldimethacrylat, Glycerindimethacrylat.

Die Komponente D) wird bevorzugt in einer Menge von 20-35 Gew.-%, bezogen auf das gesamte Copolymerisat, eingesetzt.

Aus den hydroxyfunktionellen Copolymerisaten können lösemittelbasierende Überzugsmittel hergestellt werden. Die Überzugsmittel enthalten ein oder mehrere Vernetzer. Als Vernetzerkomponente b) können Polyisocyanate, blockierte Polyisocyanate und/oder Aminoplastharze eingesetzt werden.

Bei den Polyisocyanaten handelt es sich beispielsweise um beliebige organische Polyisocyanate mit aliphatisch, cycloaliphatisch, araliphatisch und/oder aromatisch gebundenen freien Isocyanatgruppen. Die Polyisocyanate sind bei Raumtemperatur flüssig oder durch Zusatz organischer Lösemittel verflüssigt. Die Polyisocyanate weisen bei 23 °C im allgemeinen eine Viskosität von 1 bis 6.000 mPas, vorzugsweise über 5 und unter 3.000 mPas auf.

Derartige Polyisocyanate sind allgemein bekannt und zum Beispiel beschrieben in DE-A 38 29 587 oder DE-A 42 26 243.

Bevorzugt handelt es sich bei den Polyisocyanaten um Polyisocyanate oder Polyisocyanatgemische mit ausschließlich aliphatisch und/oder cycloaliphatisch gebundenen Isocyanatgruppen mit einer mittleren NCO-Funktionalität von 1,5 bis 5, bevorzugt 2 bis 4.

Besonders gut geeignet sind beispielsweise die sogenannten "Lackpolyisocyanate" auf Basis von Hexamethylendiisocyanat, 1-Isocyanato-3,3,5-trimethyl-5-isocyanatomethylcyclohexan (IPDI) und/oder Bis(isocyanatocyclohexyl)-methan und die an sich bekannten Biuret-, Allophanat-, Urethan- und/oder Isocyanuratgruppen aufweisenden Derivate dieser Diisocyanate, die im Anschluß an ihre Herstellung, vorzugsweise durch Destillation, vom überschüssigem Ausgangsdiisocyanat bis auf einen Restgehalt von weniger als 0,5 Gew.-% befreit worden sind.

Ebenfalls sehr gut geeignet sind sterisch behinderte Polyisocyanate der allgemeinen Formel 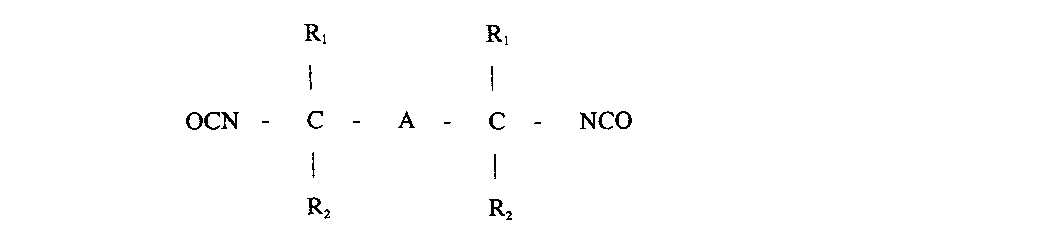 wobei
R₁ = H oder R₂,
R₂ = CₙH₂ₙ₊₁ mit n = = bis 6 sind.

Die Substituenten R₁ und R₂ sind entweder linear oder verzweigt, gleich oder ungleich. Das Grundgerüst A kann aus einer einfachen Bindung, einem aromatischen oder alicyclischen Ring oder aus einer aliphatischen linearen oder verzweigten C-Kette mit 1 bis 12 C-Atomen bestehen. Beispiele hierfür sind 1,1,6,6-Tetramethylhexamethylendiisocyanat, 1,5-Dibutyl-pentamethyldiisocyanat, p- oder m-Tetramethylxylylendiisocyanat.

Die Diisocyanate können auch in üblicher Weise zu höherfunktionellen Verbindungen umgesetzt werden, beispielsweise durch Trimerisierung oder durch Umsetzung mit Wasser oder Polyolen, wie z.B. Trimethylolpropan oder Glycerin.

Die Polyisocyanate können auch in Form isocyanatmodifizierter Harze verwendet werden.

Die Polyisocyanate können auch in partiell blockierter Form eingesetzt werden. Beispiele für partiell blockierte Isocyanate sind beliebige Di- und/oder Polyisocyanate, bei denen ein Teil der Isocyanatgruppen mit Verbindungen umgesetzt worden sind, die aktiven Wasserstoff enthalten. Als Di- und/oder Polyisocyanate können auch entsprechende isocyanatgruppenhaltige Prepolymere verwendet werden. Es handelt sich zum Beispiel um aliphatische, cycloaliphatische, aromatische, gegebenenfalls auch sterisch gehinderte Polyisocyanate, wie sie vorstehend bereits beschrieben wurden. Bevorzugt werden dreiwertige aromatische und/oder aliphatische partiell blockierte Isocyanate mit einer zahlenmittleren Molmasse von z.B. 500 - 1.500.

Niedermolekulare aciden Wasserstoff enthaltende Verbindungen zum Blockieren von NCO-Gruppen sind bekannt. Beispiele dafür sind aliphatische oder cycloaliphatische Alkohole, Dialkylaminoalkohole, Oxime, Lactame, Imide, Hydroxylalkylester, Malonsäure- oder Acetessigsäureester.

Die erfindungsgemäßen Überzugsmittel enthalten organische Lösemittel. Die Lösemittel können aus der Herstellung der Bindemittel stammen oder separat zugegeben werden. Dabei handelt es sich beispielsweise um solche Lösemittel, wie sie bereits vorstehend zur Herstellung der Lösungspolymerisate genannt wurden.

In den erfindungsgemäßen Überzugsmitteln können Pigmente und/oder Füllstoffe enthalten sein. Als Pigmente sind alle lacküblichen Pigmente organischer oder anorganischer Natur geeignet. Beispiele für anorganische oder organische Farbpigmente und Füllstoffe sind Titandioxid, mikronisiertes Titandioxid, Eisenoxidpigmente, Zinkphosphat (Korrosionsschutzpigment), Azopigmente, Phthalocyaninpigmente, Chinacridon- oder Pyrrolopyrrolpigmente, Ruß, Siliciumdioxid, Bariumsulfat, Talkum, , Aluminiumsilikat, Magnesiumsilikat.

In den Überzugsmitteln können lackübliche Additive enthalten sein. Bei den Additiven handelt es sich um die üblichen auf dem Lacksektor einsetzbaren Additive. Beispiele für solche Additive sind Lichtschutzmittel, z.B. auf Basis von Benztriazolen und HALS-Verbindungen, Verlaufsmittel auf der Basis von (Meth)acryl-Homopolymerisaten oder Silikonöle, rheologiebeeinflussende Mittel, wie hochdisperse Kieselsäure oder polymere Harnstoffverbindungen, Verdicker, wie anvernetzte Polycarbonsäure oder Polyurethane, Antischaummittel, Netzmittel, Härtungsbeschleuniger für die Vernetzungsreaktion der OH-funktionellen Bindemittel, beispielsweise organische Metallsalze, wie Dibutylzinndilaurat, Zinknaphthenat und tertiäre Aminogruppen enthaltende Verbindungen wie Triethylamin für die Vernetzungsreaktion mit Polyisocyanaten. Die Additive werden in üblichen, dem Fachmann geläufigen Mengen eingesetzt.

Zur Herstellung pigmentierter Überzugsmittel werden die Einzelbestandteile miteinander vermischt und in üblicher Weise homogenisiert bzw. vermahlen. Beispielweise kann so vorgegangen werden, daß zunächst ein Teil des hydroxylgruppenhaltigen Copolymerisates mit den Pigmenten und/oder Füllstoffen sowie lacküblichen Additiven und Lösemitteln vermischt und in Mahlaggregaten angerieben wird. Danach wird das Mahlgut mit der restlichen Copolymerisatlösung komplettiert.

Je nach Art der Vernetzer können mit den Bindemitteln einkomponentige oder zweikomponentige Überzugsmittel formuliert werden. Werden als Vernetzer Polyisocyanate mit freien Isocyanatgruppen eingesetzt, handelt es sich um zweikomponentige Systeme, d.h. die hydroxylgruppenhaltige Bindemittelkomponente, ggf. mit Pigmenten, Füllstoffen und lacküblichen Additiven, wird erst kurz vor der Applikation mit der Polyisocyanatkomponente vermischt. Dann kann ggf. mit organischen Lösemitteln auf Spritzviskosität eingestellt. Die auf diese Weise hergestellten Überzugsmittel sind besonders geeignet zur Herstellung von pigmentierten oder transparenten Deckschichten eines lufttrocknenden oder forciert- trocknenden, z.B. bis 80 °C trocknenden, Mehrschichtüberzuges. Sie können jedoch auch bei höheren Temperaturen von z.B. 80-140°C gehärtet werden. Sie eignen sich für die Fahrzeug- und Industrielackierung, insbesondere für die Reparaturlackierung von Fahrzeugen und Fahrzeugteilen.

Die Überzugsmittel werden nach bekannten Verfahren, wie z.B. Spritzen, Tauchen, Rollen oder Rakeln, appliziert. Als transparente Klarlackschicht können die Überzugsmittel beispielsweise nach dem Naß-in-Naß-Verfahren auf konventionelle oder wäßrige Basislacke aufgetragen werden, worauf beide Schichten gemeinsam z.B. 10-60 min bei z.B. 40-80 °C gehärtet werden. Als pigmentierte Decklackschicht können die Überzugsmittel beispielsweise auf übliche 1K- oder 2K-Füllerschichten aufgebracht werden. Die erfindungsgemäßen Überzugsmittel können jedoch auch als Füllerschicht, beispielsweise auf übliche Grundierungen, z.B. 2K-Epoxidgrundierungen aufgebracht und bei Raumtemperatur getrocknet werden.

Es wird auch ein Verfahren zur Herstellung von Mehrschichtüberzügen bzw. die Verwendung der erfindungsgemäßen Bindemittel in Überzugsmitteln zur Herstellung von Mehrschichtüberzügen beschrieben, wobei insbesondere die pigmentierten Deck- und transparenten Klarlackschichten von Mehrschichtüberzügen durch die Bindemittel bzw. Überzugsmittel erstellt werden. Die aus den Bindemitteln formulierten Überzugsmittel weisen hohe Reaktivität und kurze Trocknungszeiten auf. Es werden schleierfreie und brillante Überzüge mit sehr guter Härte erzielt.

Die Erfindung soll an den folgenden Beispielen näher- erläutert werden.

### Beispiel 1

### Herstellung eines (Meth)acryl-Copolymerisats:

In einem 2-Liter-Dreihalskolben, der mit Rührwerk, Thermometer, Kühler und zwei Tropftrichtern ausgestattet ist, werden 60 g Xylol-Isomerengemisch, 100 g eines aromatischen Kohlenwasserstoffs mit einem Siedebereich von 155-178°C, 80 g n-Butylacetat, 72 g Glycidylneodecanoat mit einem Glycidyläquivalentgewicht von 249 und 62 g Vinylneodecanoat vorgelegt und unter Rühren auf 149°C aufgeheizt. Innerhalb von 5 Stunden wird eine Monomerenmischung aus 31 g Acrylsäure, 80 g Styrol, 135 g 2-Hydroxyethylmethacrylat, 149 g Methylmethacrylat und 11 g epsilon-Caprolacton gleichzeitig zugetropft mit einer Initiator-Lösung aus 10 g eines aromatischen Kohlenwasserstoffs mit einem Siedebereich von 155-178°C, 5 g Di-tert.-Butylperoxid und 5 g Dicumylperoxid. Nach Zulaufende sinkt die Temperatur auf 144°C ab. Die Tropftrichter werden mit 30 g eines aromatischen Kohlenwasserstoffs mit einem Siedebereich von 155-178°C nachgespült.
Danach wird der Ansatz 4 Stunden lang nachpolymerisiert. Der Umsatz beträgt dann ca. 99%.

Nach dem Verdünnen mit 170 g n-Butylacetat wird eine (Meth)acryl-Copolymerisat-Lösung erhalten mit einem Festkörper von 55,4% (Festkörper bei 1 h 150°C), einer Säurezahl von 17,8 mg KOH/g, einer OH-Zahl von 135 mg KOH/g, einer Viskosität von 1800 mPa.s/25°C und einem Rest-Monomerengehalt des Vinylneodecanoats von 0,65% (bezogen auf den Gesamteinsatz des Vinylmonomeren).

### Beispiel 2

### Herstellung eines (Meth)acryl-Copolymerisats:

In einem 2-Liter-Dreihalskolben, der mit Rührwerk, Thermometer, Kühler und zwei Tropftrichtern ausgestattet ist, werden 60 g Xylol-Isomerengemisch, 100 g eines aromatischen Kohlenwasserstoffs mit einem Siedebereich von 155-178°C, 80 g n-Butylacetat, 72 g Glycidylneodecanoat mit einem Glycidyläquivalentgewicht von 249 und 62 g Vinylneodecanoat vorgelegt und unter Rühren auf 150°C aufgeheizt. Innerhalb von 5 Stunden wird eine Monomerenmischung aus 31 g Acrylsäure, 100 g Styrol, 118 g 2-Hydroxyethylmethacrylat, 14 g 2-Hydroxypropylmethacrylat,140 g Methylmethacrylat und 3 g epsilon-Caprolacton gleichzeitig zugetropft mit einer Initiator-Lösung aus 10 g eines aromatischen Kohlenwasserstoffs mit einem Siedebereich von 155-178°C, 5 g Di-tert.-Butylperoxid und 5 g Dicumylperoxid. Nach Zulaufende sinkt die Temperatur auf 145°C ab. Die Tropftrichter werden mit 30 g eines aromatischen Kohlenwasserstoffs mit einem Siedebereich von 155-178°C nachgespült.

Danach wird der Ansatz 4 Stunden lang nachpolymerisiert. Der Umsatz beträgt dann ca. 99%.

Nach dem Verdünnen mit 170 g n-Butylacetat wird eine (Meth)acryl-Copolymerisat-Lösung erhalten mit einem Festkörper von 54,6% (Festkörper bei 1 h 150°C), einer Säurezahl von 16,5 mg KOH/g, einer OH-Zahl von 132 mg KOH/g, einer Viskosität von 1580 mPa.s/25°C und einem Rest-Monomerengehalt des Vinylneodecanoats von 0,8% (bezogen auf den Gesamteinsatz des Vinylmonomeren).

### Beispiel 3

### Herstellung eines (Meth)acryl-Copolymerisats:

In einem 2-Liter-Dreihalskolben, der mit Rührwerk, Thermometer, Kühler und zwei Tropftrichtern ausgestattet ist, werden 140 g Xylol-Isomerengemisch, 100 g eines aromatischen Kohlenwasserstoffs mit einem Siedebereich von 155-178°C, 72 g Glycidylneodecanoat mit einem Glycidyläquivalentgewicht von 249 und 62 g Vinylneodecanoat vorgelegt und unter Rühren auf 150°C aufgeheizt. Innerhalb von 5 Stunden wird eine Monomerenmischung aus 31 g Acrylsäure, 100 g Styrol, 118 g 2-Hydroxyethylmethacrylat, 14 g 2-Hydroxypropylmethacrylat, 136 g Methylmethacrylat und 3 g epsilon-Caprolacton gleichzeitig zugetropft mit einer Initiator-Lösung aus 10 g eines aromatischen Kohlenwasserstoffs mit einem Siedebereich von 155-178°C, 7 g Di-tert.-Butylperoxid und 7 g Dicumylperoxid. Nach Zulaufende sinkt die Temperatur auf 146°C ab. Die Tropftrichter werden mit 30 g eines aromatischen Kohlenwasserstoffs mit einem Siedebereich von 155-178°C nachgespült.
Danach wird der Ansatz 4 Stunden lang nachpolymerisiert. Der Umsatz beträgt dann ca. 99%.

Nach dem Verdünnen mit 170 g Xylol-Isomerengemisch wird eine (Meth)acryl-Copoly- merisat-Lösung erhalten mit einem Festkörper von 54,3% (Festkörper bei 1 h 150°C), einer Säurezahl von 16,1 mg KOH/g, einer OH-Zahl von 132 mg KOH/g, einer Viskosität von 2990 mPa.s/25°C und einem Restmonomerengehalt des Vinylneodecanoats von 0,82% (bezogen auf den Gesamteinsatz des Vinylmonomeren).

### Beispiel 4

### Herstellung eines Klarlacks:

85,3 g des nach Beispiel 1 erhaltenen (Meth)acryl-Copolymerisats werden mit 0,3 g einer 1%igen Lösung eines silikonhaltigen Verlaufsmittels in Xylol-Isomerengemisch, 8,1 g Butylglykolacetat, 5,06 g eines aromatischen Kohlenwasserstoffs mit einem Siedebereich von 155-178°C, 0,6 g Lichtschutzmittel vom Typ Benztriazol, 0,6 g Lichtschutzmittel vom Typ HALS und 0,04 g einer 10%igen Dibutylzinndilaurat-Lösung in n-Butylacetat versetzt.

### Beispiel 5

### Herstellung eines Klarlacks:

85,3 g des nach Beispiel 2 erhaltenen (Meth)acryl-Copolymerisats werden mit 0,3 g einer 1%igen Lösung eines silikonhaltigen Verlaufsmittels in Xylol-Isomerengemisch, 8,1 g Butylglykolacetat, 5,06 g eines aromatischen Kohlenwasserstoffs mit einem Siedebereich von 155-178°C, 0,6 g Lichtschutzmittel vom Typ Benztriazol, 0,6 g Lichtschutzmittel vom Typ HALS und 0,04 g einer 10%igen Dibutylzinndilaurat-Lösung in n-Butylacetat versetzt.

### Beispiel 6

### Herstellung eines Klarlacks:

85,3 g des nach Beispiel 3 erhaltenen (Meth)acryl-Copolymerisats werden mit 0,3 g einer 1%igen Lösung eines silikonhaltigen Verlaufsmittels in Xylol-Isomerengemisch, 8,1 g Butylglykolacetat, 5,06 g eines aromatischen Kohlenwasserstoffs mit einem Siedebereich von 155-178°C, 0,6 g Lichtschutzmittel vom Typ Benztriazol, 0,6 g Lichtschutzmittel vom Typ HALS und 0,04 g einer 10%igen Dibutylzinndilaurat-Lösung in n-Butylacetat versetzt.

### Vergleichsklarlack

Analog Beispiel 4-6 wurden 2 Vergleichsklarlacke hergestellt, wobei die erfindungsgemäßen Copolymerisate durch Vergleichscopolymere aus der EP 349 818, Beispiel 1 und Beispiel 2 ersetzt wurden. Das Copolymerisat aus Beispiel 2, EP 349 818 wurde jedoch ohne die zusätzliche Monoisocyanataddition hergestellt.

### Herstellung einer Härter-Lösung:

Eine Härter-Lösung wird bereitet aus 39,10 g eines aliphatischen Polyisocyanats auf der Basis von cyclotrimerisiertem Hexamethylendiisocyanat, 4,10 g Ethoxypropylacetat, 10,94 g n-Butylacetat, 29,20 g eines aromatischen Kohlenwasserstoffs mit einem Siedebereich von 155-178°C, 12,50 g Xylol-Isomerengemisch, 4,00 g Methoxypropylacetat und 0,16 g einer 10%igen Dibutylzinndilaurat-Lösung in n-Butylacetat.

### Applikation der Überzugsmittel:

Die vorstehend bereiteten Klarlacke der Beispiele 4-6 und der Vergleichsklarlack werden jeweils kurz vor der Verarbeitung mit der Härterlösung im Volumenverhältnis 2:1 vermischt und mit einer Verdünnung aus n-Butylacetat:Methoxypropylacetat = 1:1 auf eine Spritzviskosität von 20 sec AK4/20°C eingestellt.

Die so erhaltenen Klarlacke werden durch Spritzauftrag in einer Trockenschichtdicke von 40-60 µm im Naß-in-Naß-Verfahren auf eine lösemittelbasierende Basislackschicht aufgebracht und nach einer Ablüftphase von 5 Minuten 30 Minuten bei 60°C gehärtet. Die Ergebnisse der lacktechnischen Untersuchungen sind in der folgenden Tabelle dargestellt.

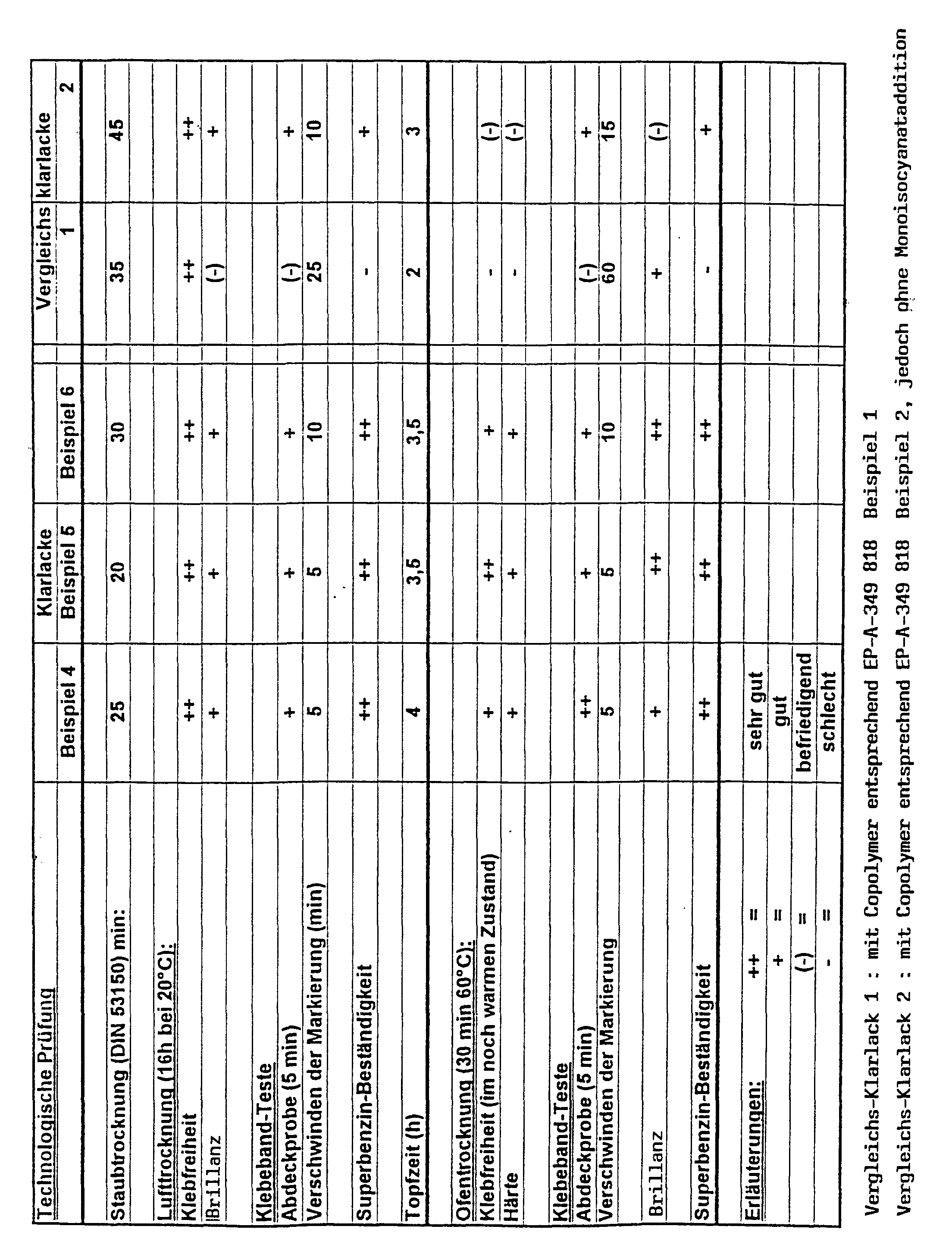

## Patentansprüche

1. Überzugsmittel, enthaltend Bindemittel, ein oder mehrere Polyisocyanate mit freien Isocyanatgruppen als Vernetzer, organische Lösemittel und gegebenenfalls Pigmente, Füllstoffe und/oder lackübliche Additive, **dadurch gekennzeichnet, daß** es als Bindemittel ein oder mehrere hydroxylgruppenhaltige Copolymerisate auf der Basis von Vinylestern von Monocarbonsäuren enthält, die eine OH-Zahl von 110 170 mg KOH/g, eine Säurezahl von 5 - 35 mg KOH/g und ein zahlenmittleres Molekulargewicht Mₙ von 1500 - 8000 g/mol besitzen und erhältlich sind durch Polymerisation von
A) 5 - 20 Gew.-% eines oder mehrerer Vinylester gesättigter Monocarbonsäuren,
B) 10 - 30 Gew.-% eines oder mehrerer vinylaromatischer Kohlenwasserstoffe,
C) 41 - 55 Gew.-% hydroxyfunktioneller polymerisierbarer ungesättigter Monomere und
D) 0 - 40 Gew.-% weiterer polymerisierbarer ungesättigter Monomere,
wobei die Komponente C)
C1) mindestens 40 Gew.-% eines oder mehrerer Hydroxyalkylester α,β-ungesättigter Monocarbonsäuren,
C2) 1 - 10 Gew.-% eines oder mehrerer Lactone und
C3) 30 - 55 Gew.-% eines oder mehrerer Umsatzprodukte einer α,β-ungesättigten Monocarbonsäure mit einem Glycidylester einer gesättigten α,α-Dialkylalkanmonocarbonsäure oder einer gesättigten α-Alkylalkanmonocarbonsäure enthält, wobei sich die Summe der Komponenten A) bis D) und die Summe der Komponenten C1) bis C3) jeweils zu 100 Gew.-% ergänzen.

2. Überzugsmittel nach Anspruch 1, **dadurch gekennzeichnet, daß** die hydroxylgruppenhaltigen Copolymerisate durch das Lösungspolymerisationsverfahren erhältlich sind.

3. Überzugsmittel nach Anspruch 1 oder 2, **dadurch gekennzeichnet, daß** die hydroxylgruppenhaltigen Copolymerisate eine OH-Zahl von 120 - 160 mg KOH/g, eine Säurezahl von 10 - 30 mg KOH/g und ein zahlenmittleres Molekulargewicht von 2000 - 6000 g/mol aufweisen.

4. Überzugsmittel nach einem der Ansprüche 1 bis 3, **dadurch gekennzeichnet, daß** die hydroxylgruppenhaltigen Copolymerisate eine Glasübergangstemperatur zwischen 30 und 70 °C aufweisen.

5. Überzugsmittel nach einem der Ansprüche 1 bis 4, **dadurch gekennzeichnet, daß** die hydroxylgruppenhaltigen Copolymerisate einen Restmonomerenanteil an Vinylestern ungesättigter Monocarbonsäuren von maximal 1 Gew.-% aufweisen.

6. Überzugsmittel nach einem der Ansprüche 1 bis 5, **dadurch gekennzeichnet, daß** in den hydroxylgruppenhaltigen Copolymerisaten als Monomerenkomponente A) Vinylester von in α-Stellung verzweigten gesättigten Monocarbonsäuren mit 5 - 15 C-Atomen pro Molekül, einzeln oder im Gemisch enthalten ist.

7. Überzugsmittel nach einem der Ansprüche 1 bis 6, **dadurch gekennzeichnet, daß** in den hydroxylgruppenhaltigen Copolymerisaten als Monomerenkomponente B) vinylaromatische Kohlenwasserstoffe mit 8 - 9 C-Atomen pro Molekül enthalten sind.

8. Überzugsmittel nach einem der Ansprüche 1 bis 7, **dadurch gekennzeichnet, daß** in den hydroxylgruppenhaltigen Copolymerisaten als Komponente C1) Hydroxyalkylester der Acrylsäure, Methacrylsäure, Crotonsäure und/oder Isocrotonsäure enthalten sind.

9. Überzugsmittel nach einem der Ansprüche 1 bis 8, **dadurch gekennzeichnet, daß** in den hydroxylgruppenhaltigen Copolymerisaten als Komponente C2) γ-Butyrolacton, δ-Valerolacton, ε-Caprolacton, β-Hydroxy-β-methyl-δ-valerolacton, λ-Laurinlacton oder deren Gemische enthalten sind.

10. Überzugsmittel nach einem der Ansprüche 1 bis 9, **dadurch gekennzeichnet, daß** in den hydroxylgruppenhaltigen Copolymerisaten als Komponente C3) Umsetzungsprodukte der (Meth)acrylsäure mit Glycidylestern gesättigter α-α-Dialkylalkanmonocarbonsäuren mit 7 bis 13 C-Atomen enthalten sind.

11. Überzugsmittel nach einem der Ansprüche 1 bis 10, **dadurch gekennzeichnet, daß** in den hydroxylgruppenhaltigen Copolymerisaten als Komponente D) Acrylsäure, Methacrylsäure und/oder deren Ester enthalten sind.

12. Verwendung der Überzugsmittel nach einem der Ansprüche 1 bis 11 für die Fahrzeugreparaturlackierung.

## Claims

1. Coating composition containing binders, one or more polyisocyanates with free isocyanate groups as crosslinking agents, organic solvents and optionally pigments, fillers and/or conventional paint additives, **characterised in that** as binder it contains one or more hydroxyl group-containing copolymers based on vinyl esters of monocarboxylic acids with a hydroxyl value of 110 to 170 mg KOH/g, an acid value of 5 to 35 mg KOH/g and a number average molecular weight Mₙ of 1,500 to 8,000 g/mol and can be obtained by polymerisation of
A) 5 to 20% by weight of one or more vinyl esters of saturated monocarboxylic acids,
B) 10 to 30% by weight of one or more vinyl aromatic hydrocarbons,
C) 41 to 55% by weight of hydroxyfunctional polymerisable, unsaturated monomers and
D) 0 to 40% by weight of further polymerisable unsaturated monomers,
wherein the components C) contain
C1) at least 40% by weight of one or more hydroxyalkyl ester(s) of α,β-unsaturated monocarboxylic acids,
C2) 1 to 10% by weight of one or more lactones and
C3) 30 to 55% by weight of one or more reaction products of an α,β-unsaturated monocarboxylic acid with a glycidyl ester of a saturated α,α-dialkyl alkane monocarboxylic acid or a saturated α-alkyl alkane monocarboxylic acid, wherein the sum of components A) to D) and the sum of components C1) to C3) add up to 100% by weight in each case.

2. Coating composition according to claim 1, **characterised in that** the hydroxyl group-containing copolymers are obtainable by the solution polymerisation process.

3. Coating composition according to claim 1 or 2, **characterised in that** the hydroxyl group-containing copolymers have a hydroxyl value of 120 to 160 mg KOH/g, an acid value of 10 to 30 mg KOH/g and a number average molecular weight of 2,000 to 6,000 g/mol.

4. Coating composition according to any of claims 1 to 3, **characterised in that** the hydroxyl group-containing copolymers have a glass transition temperature between 30 and 70°C.

5. Coating composition according to any of claims 1 to 4, **characterised in that** the hydroxyl group-containing copolymers have a maximum residual monomer content of vinyl esters of unsaturated monocarboxylic acids of 1% by weight.

6. Coating composition according to any of claims 1 to 5, **characterised in that** the hydroxyl group-containing copolymers contain vinyl esters of saturated monocarboxylic acids branched in the α position with 5 to 15 C atoms per molecule, individually or in a mixture as monomer component A).

7. Coating composition according to any of claims 1 to 6, **characterised in that** the hydroxyl group-containing copolymers contain vinyl aromatic hydrocarbons with 8 to 9 C atoms per molecule as monomer component B).

8. Coating composition according to any of claims 1 to 7, **characterised in that** the hydroxyl group-containing copolymers contain hydroxyalkyl esters of acrylic acid, methacrylic acid, crotonic acid and/or isocrotonic acid as component C1).

9. Coating composition according to any of claims 1 to 8, **characterised in that** the hydroxyl group-containing copolymers contain γ-butyrolactone, δ-valerolactone, ε-caprolactone, β-hydroxy-β-methyl-δ-valerolactone, λ-laurinlactone or mixtures thereof as component C2).

10. Coating composition according to any of claims 1 to 9, **characterised in that** the hydroxyl group-containing copolymers contain reaction products of (meth)acrylic acid with glycidyl esters of saturated α-α-dialkyl alkane monocarboxylic acids with 7 to 13 C atoms as component C3).

11. Coating composition according to any of claims 1 to 10, **characterised in that** the hydroxyl group-containing copolymers contain acrylic acid, methacrylic acid and/or the esters thereof as component D).

12. Use of coating compositions according to any of claims 1 to 11 for painting during vehicle repair.

## Revendications

1. Composition de revêtement contenant un liant, un ou plusieurs polyisocyanates comportant des groupes isocyanate libres en tant qu'agent de réticulation, des solvants organiques et éventuellement des pigments, des charges et/ou des additifs usuels dans des peintures, **caractérisée en ce qu'**elle contient en tant que liant un ou plusieurs copolymères contenant des groupes hydroxy, à base d'esters vinyliques d'acides monocarboxyliques qui ont un indice de groupe OH de 110-170 mg de KOH/g, un indice d'acide de 5-35 mg de KOH/g et une masse moléculaire moyenne en nombre Mₙ de 1 500 - 8 000 g/mole, et peuvent être obtenus par polymérisation de
A) 5-20 % en poids d'un ou plusieurs esters vinyliques d'acides monocarboxyliques saturés,
B) 10-30 % en poids d'un ou plusieurs hydrocarbures vinylaromatiques,
C) 41-55 % en poids de monomères insaturés polymérisables à fonction hydroxy, et
D) 0-40 % en poids d'autres monomères insaturés polymérisables, le composant C) contenant
C1) au moins 40 % en poids d'un ou plusieurs esters hydroxyalkyliques d'acides monocarboxyliques α,β-insaturés,
C2) 1-10 % en poids d'une ou plusieurs lactones, et
C3) 30-55 % en poids d'un ou plusieurs produits de réaction d'un acide mono-carboxylique α,β-insaturé avec un ester glycidylique d'un acide α,α-dialkylalcanemonocarboxylique saturé ou d'un acide α-alkylalcane-monocarboxylique saturé, la somme des composants A) à D) et la somme des composants C1) à C3) se complétant chacune à 100 % en poids.

2. Composition de revêtement selon la revendication 1, **caractérisée en ce que** les copolymères contenant des groupes hydroxy peuvent être obtenus par le procédé de polymérisation en solution.

3. Composition de revêtement selon la revendication 1 ou 2, **caractérisée en ce que** les copolymères contenant des groupes hydroxy présentent un indice de groupes OH de 120-160 mg de KOH/g, un indice d'acide de 10-30 mg de KOH/g et une masse moléculaire moyenne en nombre de 2 000 - 6 000 g/mole.

4. Composition de revêtement selon l'une quelconque des revendications 1 à 3, **caractérisée en ce que** les copolymères contenant des groupes hydroxy présentent une température de transition vitreuse comprise entre 30 et 70°C.

5. Composition de revêtement selon l'une quelconque des revendications 1 à 4, **caractérisée en ce que** les copolymères contenant des groupes hydroxy présentent une teneur de monomères résiduels en esters vinyliques d'acides monocarboxyliques insaturés de 1 % en poids au maximum.

6. Composition de revêtement selon l'une quelconque des revendications 1 à 5, **caractérisée en ce que** les copolymères contenant des groupes hydroxy contiennent en tant que composant monomère A) des esters vinyliques d'acides monocarboxyliques saturés ramlfiés en position α, ayant de 5 à 15 atomes de carbone par molécule, seuls ou en mélange.

7. Composition de revêtement selon l'une quelconque de revendications 1 à 6, **caractérisée en ce que** les copolymères contenant des groupes hydroxy contiennent en tant que composant monomère B) des hydrocarbures vinylaromatiques ayant de 8 à 9 atomes de carbone par molécule.

8. Composition de revêtement selon l'une quelconque des revendications 1 à 7, **caractérisée en ce que** les copolymères contenant des groupes hydroxy contiennent en tant que composant C1) des esters hydroxyalkyliques de l'acide acrylique, de l'acide méthacrylique, de l'acide crotonique et/ou de l'acide isocrotonique.

9. Composition de revêtement selon l'une quelconque des revendications 1 à 8, **caractérisée en ce que** les copolymères contenant des groupes hydroxy contiennent en tant que composant C2) de la γ-butyrolactone, de la δ-vatérolactone, de l'ε-caprolactone, de la β-hydroxy-β-méthyl-δ-valérolactone, de la λ-laurolactone ou des mélanges de celles-ci.

10. Composition de revêtement selon l'une quelconque des revendications 1 à 9, **caractérisée en ce que** les copolymères contenant des groupes hydroxy contiennent en tant que composant C3) des produits de réaction de l'acide (méth)acrylique avec des esters glycidyliques d'acides α,α-dialkylalcane- monocarboxyliques saturés ayant de 7 à 13 atomes de carbone.

11. Composition de revêtement selon l'une quelconque des revendications 1 à 10, **caractérisée en ce que** les copolymères contenant des groupes hydroxy contiennent en tant que composant D) de l'acide acrylique, de l'acide méthacrylique et/ou des esters de ceux-ci.

12. Utilisation des compositions de revêtement selon l'une quelconque des revendications 1 à 11, pour le peinturage de réparation de véhicules.
